# FASCICULE DE BREVET EUROPEEN

(11) **EP 0 469 942 B1**
(45) Date de publication et mention de la délivrance du brevet: **24.05.1995**
(21) Numéro de dépôt: 91401848.6
(22) Date de dépôt: 04.07.1991
(51) Int. Cl.: G02B 23/12

(54) **Dispositif optique d'observation jour-nuit**
Optisches Tag-Nachtsichtgerät
Optical day-night observation device

(30) Priorité: 31.07.1990 FR 9009741
(43) Date de publication de la demande: 05.02.1992
(73) Titulaire: THOMSON-TRT DEFENSE, 78280 Guyancourt (FR)
(72) Inventeur: Espie, Jean-Luc, Thomson-CSF, F-92045 Paris La Défense (FR); Poulon, Gilbert, Thomson-CSF, F-92045 Paris La Défense (FR)
(74) Mandataire: Lincot, Georges

(56) Documents cités:
- WO-A-86/05281
- WO-A-89/04008
- DE-A- 2 054 387
- DE-A- 2 704 185

## Description

La présente invention a pour objet un dispositif optique, du type jumelle, permettant l'observation de jour comme de nuit.

Actuellement, il existe un certain nombre de jumelles de jour, présentant des qualités de compacité grâce à l'utilisation des prismes de Porro de première ou de seconde espèce, ou bien des prismes de Péchan-Schmidt.

De même, il existe des jumelles de vision de nuit, comportant un ou deux tubes intensificateurs d'image, permettant la vision à grossissement 1 pour la conduite, le cheminement ou les travaux nocturnes, ou à grossissement supérieur pour l'observation nocturne.

La réunion de ces deux fonctions dans un matériel unique présenterait des avantages évidents pour le militaire en opération, celui-ci devant porter sur lui de nombreux équipements nuisant à sa mobilité.

Ceci ne serait cependant vrai que si cet équipement de vision jour-nuit offrait un gain en masse et encombrement par rapport à deux équipements distincts et si les performances de chacune des fonctions restaient d'un niveau comparable à celles des matériels actuels.

Selon les brevets WO-A-86/05281 et WO-A-89/04008, il est connu des systèmes de type jumelle jour-nuit comportant des moyens optiques d'observation diurne et nocturne, une partie des voies optiques respectifs étant commune. Selon le brevet DE-A-2054387 il est connu des miroirs pivotants pour commuter entre une voie de jour et une voie de nuit. Cependant aucune possibilité de vision de jour binoculaire à deux voies associée à une vision de nuit bioculaire à voie unique n'est connue.

La présente invention concerne un tel système permettant, grâce à un dispositif optique mécanique nouveau, de concilier dans un seul matériel compact et léger, répondant à toutes les contraintes militaires requises (résistance mécanique, étanchéité, ...), l'observation diurne et la vision nocturne, et ce grâce à une combinaison entre un système bi-objectif de jour associé à un système mono-objectif pour la vision de nuit, les deux systèmes coopérant respectivement avec un système bioculaire.

Le dispositif objet de la présente invention est caractérisé en ce qu'il est constitué structurellement par un corps central renfermant des éléments optiques objectif, tube intensificateur et collimateur nécessaires à l'observation nocturne et, montés à rotation sur ledit corps central, deux corps latéraux renfermant chacun d'une part une partie objectif et un système à prisme de redressement d'image nécessaires à l'observation diurne, d'autre part une partie oculaire commune aux moyens d'observation diurne et nocturne et enfin des miroirs de renvoi et un groupe de focalisation nécessaires à la vision nocturne.

Selon une forme de réalisation préférée de l'invention, le corps central du dispositif optique d'observation jour-nuit comporte deux lumières latérales, sensiblement en regard l'une de l'autre, l'une des lumières présentant une forme sensiblement circulaire en projection, coopérant, en superposition, avec une lumière de forme correspondante ménagée dans un corps latéral solidarisé au corps central, tandis que l'autre lumière du corps central, de forme oblongue, coopère avec une lumière circulaire ménagée sur un corps latéral monté à rotation sur ledit corps central.

Ledit corps central renferme l'objectif de nuit, le tube intensificateur et le collimateur tandis que chaque corps latéral comporte un objectif de jour, un prisme de redressement, un oculaire commun à la vision nocturne et diurne, un miroir de renvoi latéral, un groupe de focalisation et un miroir de renvoi central.

Des moyens mécaniques de commutation et d'escamotage, permettent de passer de l'observation diurne à l'observation nocturne et vice-versa. Ils sont constitués par une bague montée à rotation sur le corps central et susceptible d'être également déplacée en translation de façon à imprimer, par l'intermédiaire d'une timonerie interne, une rotation appropriée aux miroirs de renvoi latéraux
- pour intercepter les faisceaux lumineux issus des moyens optiques d'observation nocturne et les diriger vers les moyens oculaires dans les corps latéraux, en observation nocturne,
et escamoter ces miroirs, permettant ainsi un passage direct des rayons lumineux issus des moyens objectifs, en observation diurne. Ces moyens permettent également par translation inverse le positionnement approprié desdits miroirs et l'énergisation du tube intensificateur.

L'invention est en outre remarquable par les points suivants :
- la timonerie de commande de chaque miroir est constituée d'une barre de transmission pourvue à une extrémité d'un picot enclanché dans une rainure périphérique de la bague capable d'entraîner en translation la barre de transmission sans empêcher la rotation de la bague et d'un ergot d'extrémité engrenant avec une encoche correspondante sur un disque.
- les miroirs sont montés directement sur les disques.
- les disques engrènent avec des structure entraînant en pivotement des miroirs qui leurs sont solidarisés.
- les disques sont sollicités en position d'encliquetage par l'intermédiaire de moyens élastiques, par exemple des ressorts.
- les moyens mécaniques sont actionnés de façon automatique par des moyens moteurs associés à une cellule photo-électrique.
- la bague présente une structure filetée interne s'engageant avec une structure correspondante du corps 1 de façon à pouvoir en rotation communiquer un mouvement de translation approprié aux tiges de commande.
- les systèmes à prisme sont des systèmes à prisme de Porro, à prismes de Péchan-Schmidt, ou tout système permettant un retournement approprié pour jumelles à vision diurne.

D'autres avantages et caractéristiques de l'invention apparaîtront à la lecture de la description non limitative suivante de formes de réalisation préférées de l'invention, en référence aux dessins annexés dans lesquels :
La Figure 1 est une vue en perspective du dispositif d'observation jour-nuit de la présente invention ;
La Figure 2 est une vue schématique de la disposition des divers éléments à l'intérieur du dispositif de la Figure 1, selon une première forme de réalisation ;
La Figure 3 est une vue schématique des éléments constitutifs du dispositif optique de la Figure 1, selon une seconde forme de réalisation ; et
La Figure 4 est une vue schématique des moyens mécaniques permettant l'escamotage par rotation du système de miroirs de renvoi mobiles.

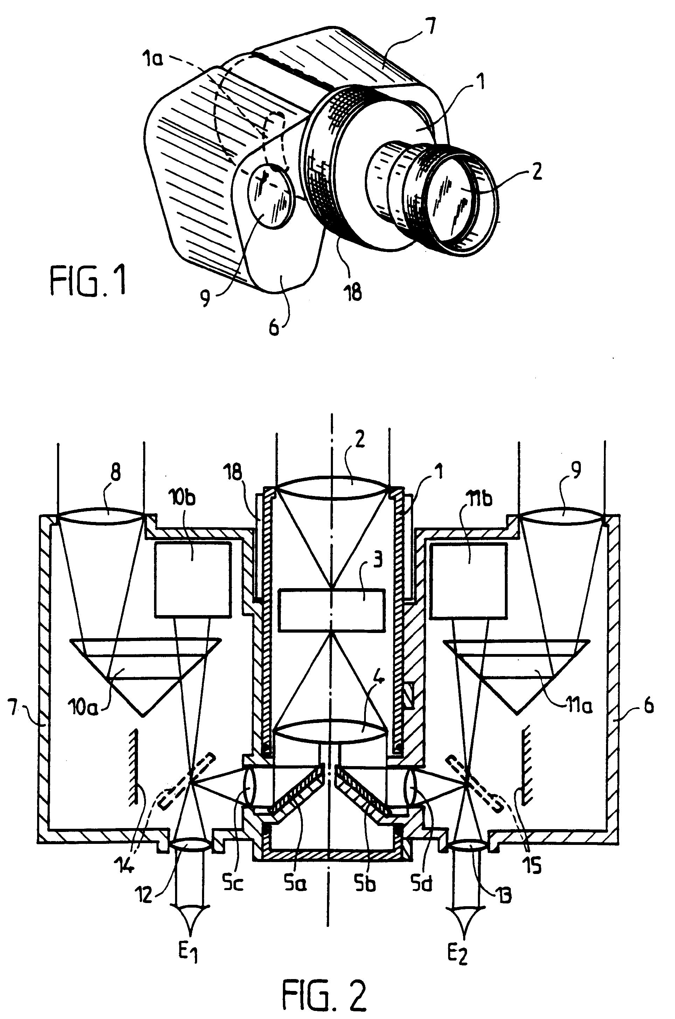

Comme représenté sur la Figure 1, le dispositif optique selon la présente invention comporte un corps central 1 qui reçoit l'objectif de nuit 2, et, comme représenté sur la Figure 2, le tube intensificateur 3, et le collimateur 4. De chaque côté du corps central 1 sont prévus deux corps latéraux 6 et 7 comportant chacun un objectif 8, 9, un dispositif à prismes de Porro 10a, 10b ; 11a, 11b, un dispositif oculaire 12, 13, un miroir de renvoi latéral 14, 15, un groupe de focalisation 5c, 5d et un miroir de renvoi central 5a, 5b. Le corps 6 est monté pivotant sur le corps 1, tandis que le corps 7 est solidaire du corps 1, ce choix n'est absolument pas critique : on peut, envisager une disposition inverse par rapport à l'axe du corps central 1, en réalisant le réglage interpupillaire de la même manière. De façon à permettre le réglage interpupillaire, le corps central 1 est pourvu d'une lumière oblongue 1a (représentée en traits discontinus sur la Figure 1) coopérant avec une lumière de forme sensiblement circulaire (non représentée sur le dessin) prévue sur le corps latéral 6. Des butées (non représentées sur les dessins) permettent de limiter la rotation du corps 6 par rapport au corps 1, à un angle d'environ 45°.

L'étanchéité de l'équipement est assurée à ce niveau, entre le corps central 1 et le corps latéral 6 par un joint torique placé dans une gorge entourant la lumière oblongue 1a, sur lequel glisse la portion de surface cylindrique du corps latéral 6 en contact avec le corps central cylindrique 1.

Les miroirs 14, 15 sont escamotables de façon à assurer dans une position active (en trait discontinu) la vision nocturne, et dans l'autre position escamotée (en trait continu) la vision diurne, permettant alors le passage direct des faisceaux lumineux issus des prismes redresseurs 10a, 10b, 11a, 11b vers les oculaires 12, 13.

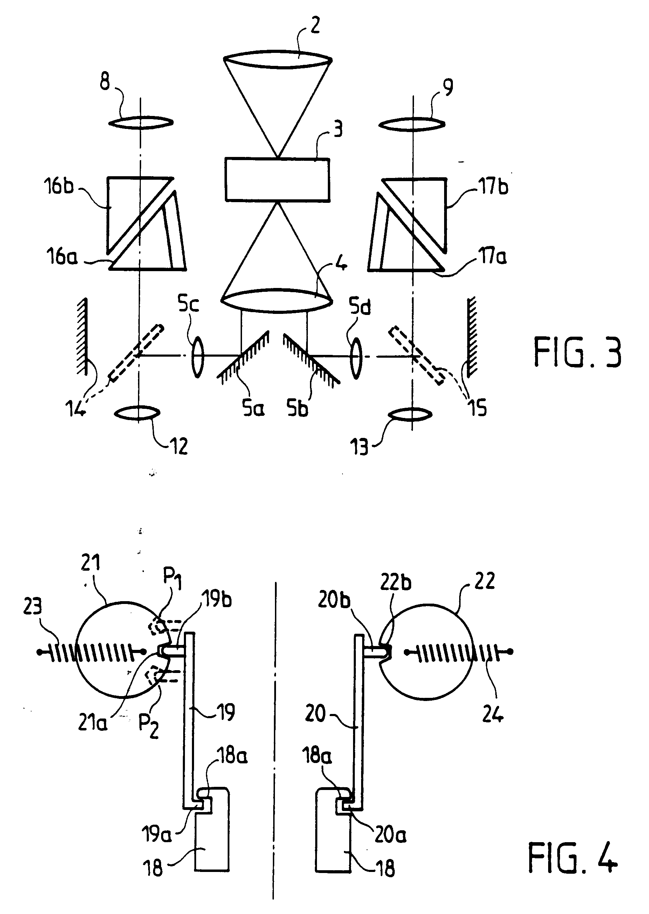

Dans la forme de réalisation de la Figure 3, sont également représentés les mêmes éléments constitutifs du dispositif de la Figure 2, sauf que les dispositifs à prismes de Porro 10a, 10b ; 11a, 11b sont remplacés par des dispositifs à prisme de Péchan-Schmidt 16a, 16b ; 17a, 17b. Il est clair que d'autres formes de réalisation à prismes ou autres moyens de retournement de l'image peuvent être utilisées dans le dispositif optique selon la présente invention.

Sur la Figure 4, est représenté le dispositif permettant l'escamotage des miroirs 14, 15. Ce dispositif comprend une bague 18 présentant une gorge périphérique externe 18a dans laquelle viennent se loger les picots d'extrémité 19a ; 20a des tiges correspondantes 19 ; 20 dont l'autre zone d'extrémité porte des ergots 19b ; 20b dont l'extrémité libre vient s'engrener avec une structure en creux 21a ; 22b ménagée à la périphérie des disques 21 ; 22 qui sont sollicités respectivement dans les positions d'encliquetage représentées en trait discontinu par action d'un ressort 23 ; 24 respectivement en fonction des mouvements translationnels des tiges 19 ; 20.

Le dispositif optique selon la présente invention peut fonctionner selon les voies optiques diurnes et nocturnes de la manière suivante :

Comme représenté sur la Figure 2, lorsque les miroirs 14 et 15 sont positionnés tels que représentés en trait discontinu, le faisceau lumineux ayant traversé l'objectif 2 puis ayant été intensifié dans le tube 3 parvient à un collimateur 4 où il est divisé par un système de miroirs 5a, 5b, puis traité respectivement par les groupes de focalisation 5c, 5d. Les deux faisceaux résultants aboutissent aux miroirs 14 et 15 qui les dirigent à travers les dispositifs oculaires 12 , 13, jusqu'aux yeux de l'observateur matérialisé en E₁ , E₂. Dans cette position de translation de la bague 18, le tube 3 est évidemment énergisé, par exemple par un micro-interrupteur placé à proximité d'un des disques 21 ou 22, sur lequel est réalisé localement un plat assurant la fermeture du micro-interrupteur pour la position en fonctionnement nocturne du disque. On voit que cette position des miroirs 14, 15 ( en trait discontinu) occulte les faisceaux photoniques provenant des objectifs 8, 9 et transitant par les dispositifs à prismes de Porro 10a, 10b ; 11a, 11b ou bien des prismes de Péchan-Schmidt 16a, 16b ; 17a, 17b vers les oculaires respectifs 12, 13.

Si l'on veut passer en position d'observation diurne, on fait subir à la bague 18 un mouvement de translation à l'opposé de celui nécessaire au positionnement en observation nocturne, de façon que les miroirs respectifs 14, 15 viennent se positionner comme représenté en trait continu sur la Figure 2. Ces miroirs 14 et 15 sont montés de façon appropriée sur les disques 21 et 22 ou bien sur des structures pivotantes (non représentées aux dessins) engrenant respectivement avec les disques 21 et 22. La position des disques représentée sur la Figure 4 est une position intermédiaire dans laquelle le disque peut être encliqueté par sollicitation des ressorts correspondants 23 ou 24 dans les positions P₁ et P₂ représentées à titre indicatif en trait discontinu sur le dessin. On voit que le mouvement de la bague 18 imprime,par l'intermédiaire des picots 19a , 20a des tiges d'actionnement correspondantes 19 et 20 qui engrènent par des ergots 19b 20b, avec les disques 21 22, un mouvement de rotation auxdits disques leur faisant prendre sous l'action des ressorts 23 et 24 les positions P₁ et P₂ précitées qui correspondent à un escamotage ou bien un repositionnement des miroirs 14 et 15, respectivement.

Ansi se trouve résolus selon la présente invention un certain nombre de commandes et de réglages d'utilisation, susceptibles d'être réalisés de façon aisée même si l'observateur porte des gants de forte épaisseur :
- le réglage interpupillaire se fait par positionnement angulaire du corps de jumelle latéral 6 par rapport au corps central 1, en permettant ainsi un ajustement très précis indispensable en vision de jour du fait de la faible dimension des pupilles de sortie ;
- les focalisations respectives des objectifs nuit et des oculaires se fait par rotation de bagues crantées en caoutchouc liées à ces oculaires ;
- la commutation jour-nuit ainsi que l'allumage de la diode infra-rouge prévue pour un éclairage auxiliaire sont respectivement réalisés par translation et rotation de la bague crantée 18 et ceci indépendamment de la position angulaire relative des corps latéraux correspondant à un réglage-interpupillaire donné.

Il est clair que l'invention n'est nullement limitée aux formes de réalisation décrites ci-dessus en référence aux dessins annexés, mais qu'elle englobe toutes les modifications et variantes à la portée de l'homme de l'art. C'est ainsi que l'on peut réaliser une rotation et une translation concommitantes de la bague 18 par un filetage approprié de la surface interne de la bague 18 et de la surface d'appui du corps 1. De même, on peut également envisager l'incorporation d'un mini-moteur commandé par cellule photo-électrique et permettant les mouvements rotationnels des disques portant les miroirs 14 et 15 en fonction de la luminosité environnante. Les corps de jumelle peuvent par ailleurs être fabriqués en n'importe quel matériau répondant aux exigences mécaniques et de résistance aux agents chimiques et aux intempéries que devrait subir le dispositif optique de l'invention. L'invention trouve toutes sortes d'applications de surveillance (police, douane, gardiennage...). Elle trouve également son application à des fins militaires et le dispositif optique d'observation jour-nuit peut être fixé par des dispositifs de sanglage adéquats au casque d'un fantassin.

## Revendications

1. Dispositif optique, du type jumelle, permettant une observation de jour comme de nuit, comportant:
- des moyens optiques permettant une observation diurne (8, 10a, 10b ; 16a, 16b ; 9, 11a, llb; 17a, 17b)
- des moyens optiques permettant une observation nocturne (2, 3, 4, 5a, 5c ; 5b, 5d; 14; 15), ces moyens présentant une partie commune (12; 13) avec les moyens d'observation diurne et
- des moyens mécaniques (18) permettant de passer de l'observation diurne à l'observation nocturne,
caractérisé en ce qu'il est constitué structurellement par un corps central renfermant des éléments optiques objectif (2), tube intensificateur (3) et collimateur (4) nécessaires à l'observation nocturne et, montés à rotation sur ledit corps central (1), deux corps latéraux (6, 7) renfermant chacun d'une part une partie objectif (8 ; 9) et un système à prisme de redressement d'image (10a, 10b, 11a, 11b; 16a, 16b, 17a, 17b) nécessaires à l'observation diurne, d'autre part une partie oculaire (12 ; 13) commune aux moyens d'observation diurne et nocturne et enfin des miroirs de renvoi (14, 15) et un groupe de focalisation (5c, 5d) nécessaires à la vision nocturne.

2. Dispositif selon la revendication 1, caractérisé en ce que le corps central comporte deux lumières latérales sensiblement en regard l'une de l'autre, l'une des lumières de forme sensiblement circulaire en projection coopérant avec une lumière de forme correspondante ménagée dans le corps latéral (7) solidarisé au corps central (1) tandis que l'autre lumière oblongue (1a) du corps central (1) coopère avec une lumière circulaire prévue sur le second corps latéral (6).

3. Dispositif selon l'une quelconque des revendications 1 et 2, caractérisé en ce que les moyens mécaniques permettant de passer de l'observation diurne à l'observation nocturne et vice-versa sont constitués par une bague (18) montée sur le corps central (1) du dispositif optique et susceptible d'être déplacée en translation de façon à imprimer par l'intermédiaire d'une timonerie de commande (19a, 19, 19b; 20a, 20, 20b) une rotation appropriée auxdits miroirs de renvoi (14, 15) qui dans leur position fonctionnelle permettent l'observation nocturne, tandis qu'ils permettent l'observation diurne dans leur position escamotée.

4. Dispositif selon la revendication 3, caractérisé en ce que la timonerie de commande de chaque miroir de renvoi (14; 15) est constituée d'une barre de transmission (19 ; 20) pourvue à une extrémité d'un picot (19a ; 20a) enclenchée dans une rainure périphérique (18a) de la bague (18) et d'un ergot d'extrémité (19b ; 20b) engrenant avec une encoche correspondante (21a, 22b) sur un disque (21, 22).

5. Dispositif selon la revendication 4, caractérisé en ce que les miroirs (14, 15) sont montés directement sur les disques (21, 22).

6. Dispositif selon la revendication 4, caractérisé en ce que les disques (21, 22) engrènent avec des structures entraînant en pivotement lesdits miroirs de renvoi (14, 15) qui leur sont solidarisés.

7. Dispositif selon l'une des revendications 4 à 6, caractérisé en ce que les disques (21, 22) sont sollicités en position d'encliquetage (P₁ ; P₂) par l'intermédiaire de moyens élastiques, par exemple des ressorts (23 ; 24).

8. Dispositif selon la revendication 1, caractérisé en ce que les moyens mécaniques (18) sont actionnés de façon automatique par des moyens moteurs associés à une cellule photo-électrique.

9. Dispositif selon la revendication 1, caractérisé en ce que la bague (18) présente une structure filetée interne s'engageant avec une structure correspondante du corps 1 de façon à pouvoir en rotation communiquer un mouvement de translation approprié aux tiges de commande (19 ; 20).

10. Dispositif selon la revendication 1, caractérisé en ce que ledit système à prisme est un système à prisme de Porro, à prismes de Péchan-Schmidt, ou tout système permettant un retournement approprié pour jumelles à vision diurne.

## Patentansprüche

1. Optische Vorrichtung nach Art eines Fernglases, die eine Beobachtung sowohl am Tage als auch in der Nacht ermöglicht, mit:
- optischen Mitteln (8, 10a, 10b; 16a, 16b; 9, 11a, 11b; 17a, 17b), die eine Beobachtung am Tage ermöglichen;
- optischen Mitteln (2, 3, 4, 5a, 5c; 5b, 5d; 14; 15), die eine Beobachtung in der Nacht ermöglichen, wobei diese Mittel einen Teil (12; 13) aufweisen, den sie mit den Mitteln zu Beobachtung am Tage gemeinsam haben; und
- mechanischen Mitteln (18), die einen Übergang von der Beobachtung am Tage zur Beobachtung in der Nacht ermöglichen;
dadurch gekennzeichnet, daß sie strukturell durch einen Mittelkörper gebildet ist, der die optischen Elemente Objektiv (2), Verstärkungsröhre (3) und Kollimator (4) umschließt, die zur Beobachtung in der Nacht notwendig und drehbar an dem Mittelkörper (1) angebracht sind, und durch zwei Seitenkörper (6, 7), die jeweils zum einen ein Objektivteil (8; 9) sowie ein Prismensystem (10a, 10b, 11a, 11b; 16a, 16b, 17a, 17b) zum Aufrichten des Bildes umschließen, die zur Beobachtung am Tage notwendig sind, und zum anderen einen Okularteil (12; 13), der den Mitteln zur Beobachtung am Tage und den Mitteln zur Beobachtung in der Nacht gemeinsam ist, und schließlich Umlenkspiegel (14, 15) und eine Fokussierungsgruppe (5c, 5d), die zur Nachtsicht notwendig sind.

2. Vorrichtung nach Anspruch 1, dadurch gekennzeichnet, daß der Mittelkörper zwei seitliche Öffnungen aufweist, die einander im wesentlichen gegenüberliegen, wobei eine der Öffnungen mit in Projektion im wesentlichen kreisförmiger Gestalt mit einer Öffnung zusammenwirkt, die eine entsprechende Form aufweist und in dem fest mit dem Mittelkörper (1) verbundenen Seitenkörper (7) ausgebildet ist, während die andere, längliche Öffnung (1a) des Mittelkörpers (1) mit einer an dem zweiten Seitenkörper (6) vorgesehenen kreisförmigen Öffnung zusammenwirkt.

3. Vorrichtung nach einem der Ansprüche 1 und 2, dadurch gekennzeichnet, daß die mechanischen Mittel, die den Übergang von der Beobachtung am Tage zu der Beobachtung in der Nacht und umgekehrt ermöglichen, durch einen Ring (18) gebildet sind, der an dem Mittelkörper (1) der optischen Vorrichtung angebracht ist und translatorisch verstellt werden kann, um mittels eines Steuergestänges (19a, 19, 19b; 20a, 20, 20b) den Umlenkspiegeln (14, 15) eine geeignete Drehung zu erteilen, wobei die Umlenkspiegel in ihrer Arbeitsposition die Beobachtung in der Nacht ermöglichen, während sie in ihrer eingeschwenkten Position die Beobachtung am Tage ermöglichen.

4. Vorrichtung nach Anspruch 3, dadurch gekennzeichnet, daß das Steuergestänge jedes Umlenkspiegels (14; 15) durch eine Übertragungsstange (19, 20) gebildet ist, die an einem Ende mit einer Spitze (19a; 20a) versehen ist, die in eine Umfangsnut (18a) des Ringes (18) eingerastet ist, sowie mit einem Endvorsprung (19b; 20b), der in eine entsprechende Aussparung (21a, 22b) an einer Scheibe (21, 22) eingreift.

5. Vorrichtung nach Anspruch 4, dadurch gekennzeichnet, daß die Spiegel (14, 15) direkt an den Scheiben (21, 22) angebracht sind.

6. Vorrichtung nach Anspruch 4, dadurch gekennzeichnet, daß die Scheiben (21, 22) mit Strukturen in Eingriff stehen, welche die mit ihnen fest verbundenen Umlenkspiegel (14, 15) verschwenken.

7. Vorrichtung nach einem der Ansprüche 4 bis 6, dadurch gekennzeichnet, daß die Scheiben (21, 22) in die Einraststellung (P₁; P₂) von elastischen Mitteln beaufschlagt sind, beispielsweise durch Federn (23; 24).

8. Vorrichtung nach Anspruch 1, dadurch gekennzeichnet, daß die mechanischen Mittel (18) in automatischer Weise von Antriebsmitteln betätigt sind, die einer fotoelektrischen Zelle zugeordnet sind.

9. Vorrichtung nach Anspruch 1, dadurch gekennzeichnet, daß der Ring (18) im Innern eine Gewindestruktur aufweist, die mit einer entsprechenden Struktur des Körpers 1 in Eingriff steht, um bei einer Drehung eine geeignete Translationsbewegung auf die Steuerstangen (19; 20) zu übertragen.

10. Vorrichtung nach Anspruch 1, dadurch gekennzeichnet, daß das Prismensystem ein System mit einem Porro-Prisma, ein System mit einem Péchan-Schmidt-Prisma oder jedes andere System ist, das ein geeignetes Umlenken bei einem Fernglas mit Tagsicht ermöglicht.

## Claims

1. Binocular-type optical device allowing observation by day as well as by night, comprising:
- optical means (8, 10a, 10b; 16a, 16b; 9, 11a, 11b; 17a, 17b) allowing daytime observation
- optical means (2, 3, 4, 5a, 5c; 5b, 5d; 14; 15) allowing night observation, these means having a part (12; 13) common to the daytime observation means and
- mechanical means (8) allowing the change from daytime observation to night observation,
characterized in that it is structurally constituted by a central body containing optical components, an objective (2), an intensifier tube (3) and a collimator (4), which are necessary for night observation and are mounted so as to rotate on the said central body (1), two lateral bodies (6, 7) each containing, on the one hand, an objective part (8; 9) and an image-righting prism system (10a, 10b, 11a, llb; 16a, 16b, 17a, 17b) which are necessary for daytime observation and, on the other hand, an eyepiece part (12; 13) common to the daytime and night observation means and, finally, deflecting mirrors (14, 15) and a focusing unit (5c, 5d) which are necessary for night vision.

2. Device according to Claim 1, characterized in that the central body comprises two lateral holes substantially facing each other, one of the holes, which has a substantially circular shape in projection, cooperating with a hole of corresponding shape made in the lateral body (7) fixedly joined to the central body (1), while the other oblong hole (1a) in the central body (1) cooperates with a circular hole provided on the second lateral body (6).

3. Device according to either one of Claims 1 and 2, characterized in that the mechanical means allowing the change from daytime observation to night observation and vice versa are constituted by a ring (18) that is mounted on the central body (1) of the optical device and is capable of being shifted in translation so as, by means of a control linkage system (19a, 19, 19b; 20a, 20, 20b), to communicate an appropriate rotation to the said deflecting mirrors (14, 15) which, in their functional position, allow night observation, while, in their retracted position, they allow daytime observation.

4. Device according to Claim 3, characterized in that the linkage system for controlling each deflecting mirror (14; 15) is constituted by a transmission bar (19; 20) provided, at one end, with a pin (19a, 20a) snapped into a peripheral groove (18a) in the ring (18) and an end stud (19b; 20b) engaging with a corresponding notch (21a, 22b) on a disc (21, 22).

5. Device according to Claim 4, characterized in that the mirrors (14, 15) are mounted directly on the discs (21, 22).

6. Device according to Claim 4, characterized in that the discs (21, 22) engage with structures driving the said deflecting mirrors (14, 15), which are fixedly joined to them, in a pivoting motion.

7. Device according to any one of Claims 4 to 6, characterized in that the discs (21, 22) are acted upon, in the locked position (P₁, P₂) via elastic means, for example springs (23; 24).

8. Device according to Claim 1, characterized in that the mechanical means (18) are actuated automatically by driving means associated with a photoelectric cell.

9. Device according to Claim 1, characterized in that the ring (18) has an internal threaded structure that engages with a corresponding structure of the body 1 so that, when rotating, it can impart an appropriate translational motion to the control rods (19; 20).

10. Device according to Claim 1, characterized in that the said prism system is a Porro-prism or Péchan-Schmidt-prism system, or any system allowing appropriate invension for daytime-vision binoculars.
